Europäisches Patentamt

European Patent Office

Office européen des brevets

(11) Publication number: 0 375 019
A1

## EUROPEAN PATENT APPLICATION

(21) Application number: 89203117.0

(22) Date of filing: 08.12.89

(51) Int. Cl.⁵ G01P 3/487

(30) Priority: 21.12.88 NL 8803124

(43) Date of publication of application:
27.06.90 Bulletin 90/26

(84) Designated Contracting States:
BE DE ES FR GB IT NL SE

(71) Applicant: SKF Industrial Trading &
Development Co, B.V.
Kelvinbaan 16
NL-3439 MT Nieuwegein(NL)

(72) Inventor: Tadic, Vedran Andelo
Julianalaan 12
Culemborg(NL)
Inventor: Blond, Alejandro
General Diaz Porlier 73 5e derecha
Madrid(ES)
Inventor: Bras, Johan Christiaan Marinus
Bantamlaan 7
Tricht(NL)
Inventor: Van Ballegooy, Syme Dirk
Wagenmaker 1
Ijsselstein(NL)

(74) Representative: Merkelbach, B.
SKF Engineering & Research Centre B.V.
P.O. Box 2350 Kelvinbaan 16
NL-3430 DT Nieuwegein(NL)

(54) Device for detecting the movement of a part.

(57) Speed detection of a moving part provided with a magnetic pulse-generator applied e.g. in the seal of a rolling bearing is known. The claimed system introduces, however, a simple manner for detecting a movement independent of the speed of the rotating part, i.e. the pulse-ring (1).

Thereto a sensor (4) is applied which comprises coils (5, 6) on the body (7) made of a relatively soft magnetic material, having poles with a narrow air-slit (8) positioned adjacent said pulse-ring (1). The coils (5, 6) of a Wheatstone circuit are connected to a high frequency signal generator.

fig.1

fig.2

fig.3

## Device for detecting the movement of a part

The invention concerns a device for detecting the movement of a part, equipped with a magnetic pulse generator which is divided into sectors which are magnetized in sequence in the direction of movement, first in one direction of magnetization, then in the other direction of magnetization, or which are not magnetized at all, and a sensor for detecting a magnetic field, whereby the pulse generator or the sensor is connected to the moving part.

A similar device is known, for example, from the French patent application 2,574,501. This publication concerns in particular the manner in which the sensor is mounted near the part whose movement must be detected.

The invention aims at creating a device of this type which will allow the detection of movement in a particularly simple manner, independent of the speed of the moving part.

For this purpose the device according to the invention is characterized by the fact that the sensor consists of a coil wound around a core made of a soft magnetic material whose poles enclose an air gap and are adjacent to the pulse generator, whereby a generator generating a high-frequency signal is connected to the coil.

The invention is based on the idea that the impedance of the coil depends on the relative permeability, which in turn depends on the magnetic field generated by the pulse generator, so that the impedance will vary with a movement of the sensor vis-a-vis the pulse generator. This variation in impedance will lead to a variation in the high-frequency voltage over the coil, which can be easily processed.

According to a preferred embodiment of the invention two equal coils are mounted on the core, which coils are connected to opposing branches of an induction bridge, whereby the other two branches of this bridge contain a third and fourth coil equal to the two aforementioned coils, whereby the generator is connected to a first pair of corner junctions of the bridge and the other pair of corner junctions releases a signal which depends on the magnetic field generated by the pulse generator.

This makes it possible to obtain in a simple manner an output voltage of the bridge which depends exclusively on the magnetic field supplied by the pulse generator, and therefore on the movement to be detected.

The invention is particularly suited to rotating bearings, with the pulse generator consisting of a ring incorporated in a seal of the bearing. According to the invention it is advantageous in this context if two sensors are mounted in the direction of rotation at a predetermined distance from one another, whereby a processing unit is used to measure the time interval between the occurrence of the same signal in the two sensors. This results in the fact that the measurement of the movement is virtually independent of irregularities in the pulse ring, and the measurement of the speed of the moving part is reduced to a time interval measurement.

The invention is further explained hereafter with the aid of a drawing showing an example of execution of the device according to the invention.

Figure 1 shows a schematic perspective view of a pulse ring and a sensor which are applicable to an example of execution of the device according to the invention.

Figure 2 is a highly schematic, partially rendered cross-section of a rotating bearing with the pulse ring contained in a seal.

Figure 3 shows an induction bridge which contains a sensor according to Figure 1.

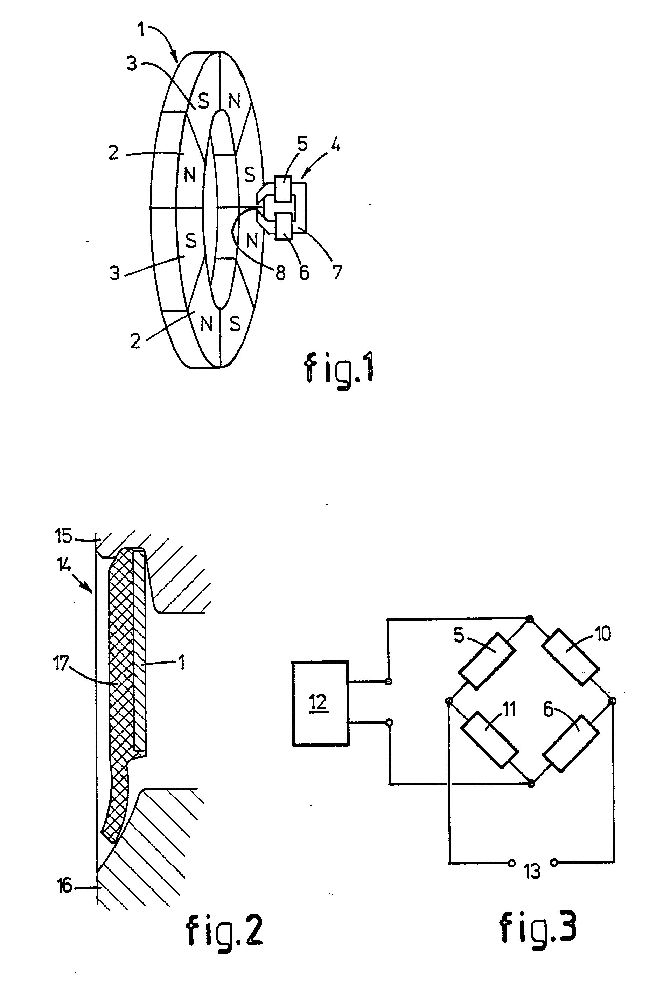

Figure 1 shows a pulse ring 1 divided into sectors 2 and 3 which in the direction of the circumference are magnetized in sequence, first in one and then in the other direction of magnetization, as indicated schematically with the letters N and S. As an alternative, it is possible to insert a non-magnetized sector between every two magnetized sectors. Near pulse ring 1 there is a sensor 4 which is equipped with two equal coils 5 and 6 wound around a core 7 made of a soft magnetic material with an air gap 8 between the poles of the core, adjacent to the pulse ring 1.

Figure 3 shows an induction bridge circuit in which two opposing branches contain the coils 5 and 6. The two other branches contain coils 10 and 11 which are equal to one another and to the coils 5 and 6. A generator 12 is connected to one pair of corner junctions of the bridge circuit, which generator supplies a high-frequency signal to the bridge. The other pair of corner junctions forms an output 13 where an output signal U can be captured which depends on the strength of the magnetic field supplied by pulse ring 1. This is due to the fact that the impedance of the coils 5, 6 depends on the relative permeability of the core 7 which in turn depends on the strength of the external magnetic field. This means that when the pulse ring 1 rotates with regard to the sensor 4, this rotation can be detected up to zero speed, which is not possible with known induction systems.

Figure 2 shows part of a bearing 14 with a partial rendering of an outer race 15 and an inner race 16. A seal 17 is attached to the outer race 15, which seal holds the pulse ring 1. As a result, the device described can be incorporated in a very simple manner in a bearing.

When incorporated in bearings the device described can be part of an anti-blocking system which can be manufactured at low cost considering that the components of the device are relatively cheap. In addition, the anti-blocking system, equipped with a device according to the invention, can also function at very low speeds which is not possible with the known systems.

During rotation the pulse ring 1 releases an oscillating signal corresponding to a sine wave. In known devices the speed is usually determined by measuring the time which elapses until a wavelength has passed the sensor 4. However, due to irregularities in the pulse ring 1 the wavelength of the signal may vary in the course of a rotation, thereby simulating a variation in speed which in reality does not occur.

According to the invention this problem may be remedied by mounting two sensors 4 in the direction of rotation at a predetermined distance from one another amounting to less than one wavelength. A processing unit - not further described - measures the time interval between the appearance of the same signal at both sensors. The result is that the accuracy of the speed measurement is determined by the accuracy of a measurement of time and the distance between the two sensors. Clearly, these two parameters can be maintained with greater accuracy than can be achieved in the manufacture and maintenance of an accurate periodic pulse ring.

The invention is not limited to the examples of execution described above. They can be elaborated in various ways within the scope of the invention.

## Claims

1. Device for detecting the movement of a part (15), equipped with a magnetic pulse generator (1) which is divided into sectors (2, 3) which are magnetized in sequence in the direction of movement, first in one direction of magnetization, then in the other direction of magnetization, or which are not magnetized at all, and a sensor (4) for detecting a magnetic field, whereby the pulse generator or the sensor is connected to the moving part, characterized by the fact that the sensor (4) consists of a coil (5, 6) wound around a core (7) made of a soft magnetic material whose poles enclose an air gap (8) and are adjacent to the pulse generator (1), whereby a generator (12) generating a high-frequency signal is connected to the coil.

2. Device according to Claim 1, characterized by the fact that two equal coils (5, 6) are mounted on the core (7),' which coils are connected to opposing branches of an induction bridge, whereby the other two branches of this bridge contain a third and fourth coil (10, 11) equal to the two aforementioned coils, whereby the generator (12) is connected to a first pair of corner junctions of the bridge and the other pair of corner junctions releases a signal (U) which depends on the magnetic field generated by the pulse generator.

3. Device according to Claim 1 or 2, intended in particular for rotating bearings, with the pulse generator (1) consisting of a ring incorporated in a seal (17) of the bearing, characterized by the fact that in the direction of rotation two sensors (4) are mounted at a predetermined distance from one another, whereby a processing unit is used to measure the time interval between the occurrence of the same signal in the two sensors.

fig.1

fig.2

fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 505 595 (FAVRE) * Col. 2, line 32-37; col. 3, line 8-19; fig. 1,2 * | 1-3 | G 01 P 3/487 |
| Y | US-A-4 001 687 (SORKIN et al) * Col. 2, line 18-40; col. 3, line 43 - col. 4, line 7; fig. 1,2 * | 1-3 | |
| Y | US-A-3 917 997 (SIDOR) * Col. 2, line 20 59; fig. 5 * | 2 | |
| Y | DE-A-2 753 738 (KLÖCKNER AG) * Page 2, line 22 - page 3, line 12; fig. 1 * | 3 | |
| A | GB-A-1 215 918 (WESTINGHOUSE) * Page 2, line 3-91; fig. 2 * | 1 | |
| A | US-A-2 731 599 (GROEPER) * Col. 1, line 49 - col. 2, line 27; fig. * | 2 | TECHNICAL FIELDS SEARCHED (Int. Cl.5) |
| A,D | FR-A-2 574 501 (S.N.R.) * Page 4, line 24 - page 5, line 12; fig. 5 * | 3 | G 01 P F 16 C |

The present search report has been drawn up for all claims

| Place of search | Date of completion of the search | Examiner |
|---|---|---|
| THE HAGUE | 12-01-1990 | HANSEN P. |